# EUROPÄISCHE PATENTSCHRIFT

(11) **EP 2 157 003 B1**
(45) Veröffentlichungstag und Bekanntmachung des Hinweises auf die Patenterteilung: **06.09.2017**
(21) Anmeldenummer: 09164372.6
(22) Anmeldetag: 02.07.2009
(51) Int. Cl.: G01D 7/00, G07C 5/08

(54) **Auswerteeinrichtung zur Ermittlung eines CO2-Ausstoßes und Verfahren zur Anzeige eines CO2-Ausstoßes**
Evaluation device for calculating a CO2 emission and method for displaying a CO2 emission
Dispositif d'évaluation destiné à la détermination d'un échappement de CO2 et procédé d'affichage d'un échappement de CO2

(30) Priorität: 20.08.2008 DE 102008041396
(43) Veröffentlichungstag der Anmeldung: 24.02.2010
(73) Patentinhaber: Robert Bosch GmbH, 70442 Stuttgart (DE)
(72) Erfinder: Spitzer, Silke, 70825 Korntal-Muenchingen (DE); Voigtlaender, Klaus, 73117 Wangen (DE); Danner, Reinhold, 72108 Rottenburg (DE); Schweiker, Markus-Alexander, 70193 Stuttgart (DE); Kimmich, Peter, 71101 Schoenaich (DE); Hoeger, Andreas, 71701 Schwieberdingen (DE); Eckert, Bernd, 71665 Vaihingen An Der Enz (DE)

(56) Entgegenhaltungen:
- EP-A1- 2 237 216
- DE-A1- 4 002 772
- DE-A1-102004 032 927
- DE-A1-102008 046 279
- DE-U1- 29 504 088
- DE-U1-202007 003 297
- FR-A1- 2 884 951
- JP-A- 2001 078 304
- JP-A- 2007 064 091
- US-A1- 2006 041 370

## Beschreibung

### Stand der Technik

Die Erfindung geht aus von einer Auswerteeinrichtung zur Ermittlung eines CO₂-Ausstoßes und einem Verfahren zur Anzeige eines CO₂-Ausstoßes nach der Gattung der nebengeordneten Ansprüche. Aus der DE 101 46 318 A1 ist bereits ein Verfahren zur Bestimmung von Kraftstoffverbrauchswerten bei Brennkraftmaschinen von Kraftfahrzeugen bekannt. Ein entsprechend bestimmter Kraftstoffverbrauchswert wird hierbei auf einer optischen Anzeige im Sichtfeld eines Fahrers eines Kraftfahrzeugs angezeigt.

Aus der FR 2884951 A1 ist eine Kohlendioxidanzeige für ein Fahrzeug mit einem Verbrennungsmotor bekannt. Das von dem Fahrzeug emittierte Kohlendioxid wird in der Einheit Gramm pro Kilometer angezeigt. Für die Berechnung der Emission wird die Temperatur des verbrannten Treibstoffs mit berücksichtigt.

Aus der US 2006/0041370 A1 ist eine Einrichtung zur Überwachung von befahrenen Emissionszonen für ein Fahrzeug bekannt. Ferner wird auch ein Kraftstofftyp bestimmt, um dem Fahrer eine nächstliegende Tankstelle für diesen jeweiligen Kraftstofftyp anzuzeigen.

Der Anmelder hat das Patent für Deutschland (DE) unter Bezugnahme auf DE102008046279A1 freiwillig eingeschränkt.und gesonderte Patentansprüche für diesen Staat vorgelegt.

### Offenbarung der Erfindung

### Vorteile der Erfindung

Die erfindungsgemäße Auswerteeinrichtung mit den Merkmalen des nebengeordneten Anspruchs hat demgegenüber den Vorteil, dass mittels einer Überwachung einer Fahrzeugeinrichtung unmittelbar ein CO₂-Ausstoß bestimmt wird, so dass der CO₂-Ausstoß einem Fahrer des Fahrzeugs angezeigt werden kann. Hierdurch kann sich der Fahrer auf einfache Weise über einen gesamten oder aktuellen CO₂-Ausstoß seines Fahrzeugs informieren. Hiermit ist es möglich, den Fahrer unmittelbar über eine tatsächliche Umweltbelastung bzw. über ein verhältnismäßig umweltfreundliches Verhalten seines Fahrzeugs informieren zu können.

Entsprechende Vorteile ergeben sich für ein erfindungsgemäßes Verfahren zur Anzeige eines CO₂-Ausstoßes eines Fahrzeugs. Durch die Anzeige des CO₂-Ausstoßes wird es einem Fahrer ermöglicht, sein Fahrverhalten unmittelbar an seine persönlichen Ziele für einen CO₂-Ausstoß anzupassen. Ferner wird es dem Fahrer ermöglicht, Testangaben für sein Fahrzeug mit den tatsächlichen CO₂-Ausstoßwerten zu vergleichen.

Durch die in den abhängigen Ansprüchen aufgeführten Maßnahmen sind vorteilhafte Weiterbildungen und Verbesserungen der in den unabhängigen Ansprüchen angegebenen Auswerteeinrichtung und des angegebenen Verfahrens möglich. So ist es möglich, über einen Sensor eine Fahrzeugantriebseinheit zu überwachen, um eine unmittelbare Rückmeldung eines CO₂-Ausstoßes von einer Fahrzeugantriebseinheit zu erhalten.

Ferner ist es vorteilhaft, erfindungsgemäß eine Energieversorgungseinrichtung des Fahrzeugs zu überwachen. Insbesondere kann hierbei eine Durchflussmenge eines Treibstoffes erfasst und für eine Bestimmung des CO₂-Ausstoßes herangezogen werden. Da der CO₂-Austoß ggf. von der Art des Treibstoffes abhängt, ist es vorteilhaft vorgesehen, einen Sensor zur Erfassung der jeweiligen Treibstoffart vorzusehen. In Abhängigkeit von einer bei einer Verbrennung eines vorgegebenen Mengenäquivalents eines jeweiligen Treibstoffs entstehenden CO2 Menge kann ein CO2-Austoss aus einer jeweiligen Durchflussmenge werden.

Ferner ist es vorteilhaft, einen Lade- bzw. Entladevorgang einer Akkumulatoreinheit zu überwachen. Insbesondere für den Fall, dass der Akkumulator über ein Stromnetz geladen wird, kann ein durch die Stromerzeugung bedingter CO2-Ausstoss in eine Berechnung mit einbezogen werden. Ferner kann ein CO2-Ausstoß dann vernachlässigt werden, wenn eine Aufladung über einen Fahrzeug-Generator erfolgt, da diese Aufladung entweder beispielsweise über eine Treibstoffverbrennung bereits erfasst wurde oder in Folge eines Schubbetriebs des Fahrzeugs ohne einen CO2-Ausstoß erfolgt.

Um neben einem Absolutwert für einen CO2-Ausstoß einem Fahrer die Möglichkeit zu geben, einen Verhältniswert einzusehen, ist die Auswerteeinrichtung erfindungsgemäß mit einer Uhrenschaltung verbunden. Hierdurch wird es ermöglicht, einen CO2-Ausstoß zeitbezogen zu bestimmen, um eine gute Vergleichsmöglichkeit gewährleisten zu können.

Ferner ist es vorteilhaft, eine Anzeigeeinrichtung mit einer erfindungsgemäßen Auswerteeinrichtung auszustatten, um eine platzsparende Bauweise im Fahrzeug zu ermöglichen. Zudem liegt eine Vielzahl der Informationen ggf. bereits auf einem Datenbusprotokoll vor, an das eine Anzeigeeinheit im Fahrzeug zur Darstellung von Fahrzeuggrößen, wie beispielsweise der Geschwindigkeit, bereits angeschlossen ist. Vorteilhaft kann dabei zwischen einer absoluten Ausgabe eines CO2-Ausstoßes und einem strecken- bzw. zeitbezogenen CO2-Ausstoß umgeschaltet werden.

### Kurze Beschreibung der Zeichnungen

Ausführungsbeispiele der Erfindung sind in der Zeichnung dargestellt und in der nachfolgenden Beschreibung näher erläutert. Es zeigen
- Fig. 1: ein erstes Ausführungsbeispiel für eine erfindungsgemäße Auswerteeinrichtung und eine erfindungsgemäße Anzeigeinrichtung für ein Fahrzeug mit einem Verbrennungsmotor,
- Fig. 2: eine erfindungsgemäße Auswerteeinrichtung für ein Fahrzeug mit einem Hybridantrieb.

### Ausführungsformen der Erfindung

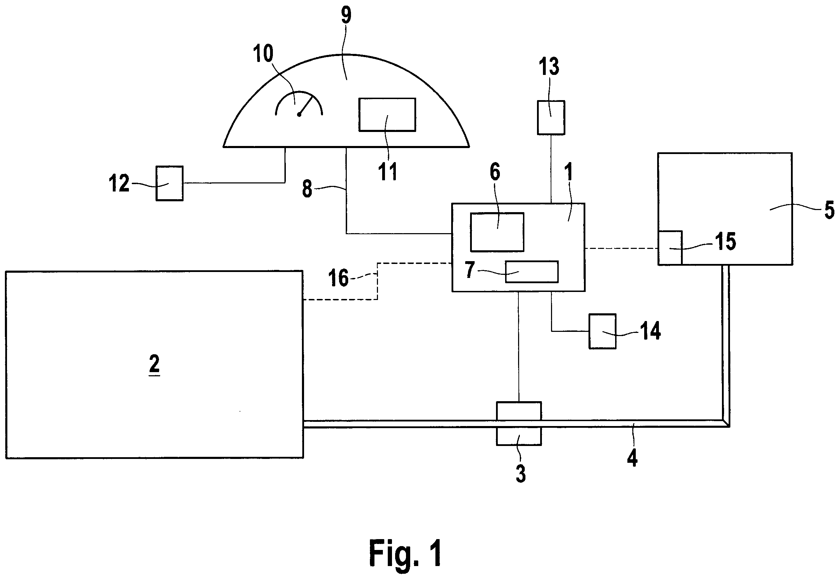

In der Fig. 1 ist eine Auswerteeinrichtung 1 für ein Fahrzeug dargestellt, das in der hier gezeigten Ausführungsform einen Verbrennungsmotor 2 aufweist. In einer ersten Ausführungsform ist die Auswerteeinrichtung 1 mit einer Durchflussmesseinrichtung 3 verbunden, die einen Treibstoffdurchfluss eines flüssigen oder gasförmigen Treibstoffs durch eine Treibstoffleitung 4 von einem Treibstofftank 5 zu dem Verbrennungsmotor 2 überwacht. Die Auswerteeinrichtung 1 weist eine Recheneinheit 6 auf, die die Durchflussmesseinrichtung 3 abfragt und eine Messung einer Durchflussmenge des Treibstoffs durchführt. In einem Speicher 7 der Auswerteeinrichtung 1 ist ein Durchschnittswert für diejenige CO₂-Menge abgelegt, die aus einem entsprechenden Volumen des Treibstoffes des Verbrennungsmotors 2 bei einer Verbrennung entsteht. In einer weiteren Ausführungsform kann die Durchflussmesseinrichtung 3 auch einen in der Figur nicht gezeigten Temperatursensor aufweisen, um eine Temperaturabhängigkeit des Volumens des Treibstoffs und damit gegebenenfalls eine Abhängigkeit des aus einem vorgegebenen Volumen des Treibstoffs bei der Verbrennung entstehenden Kohlendioxids von der Temperatur des Treibstoffs auszugleichen. Eine Abhängigkeit zwischen Temperatur und pro Volumeneinheit entstehendem Kohlendioxid ist beispielsweise in einer gespeicherten Kennlinie abgelegt

Somit kann mittels eines Aufaddierens der über den Durchflusssensor 3 ermittelten Treibstoffmenge eine Gesamtmenge des durch Verbrennung des Treibstoffes aus dem Treibstofftank 5 entstehenden Kohlendioxides bestimmt werden. Über eine Schnittstelle 8 wird diese Information an eine Anzeigeeinheit 9 im Fahrzeug weitergeleitet. Die Anzeigeeinheit 9, die insbesondere als ein sogenanntes Kombiinstrument vor dem Fahrer des Fahrzeugs ausgeführt ist, weist vorzugsweise noch andere Anzeigen 10 auf, beispielsweise eine Geschwindigkeitsanzeige. Insbesondere weist die Anzeigeeinheit 9 jedoch eine Anzeige 11 für eine Darstellung des gesamten CO₂-Ausstoßes auf. Ggf. kann die Anzeige des CO₂-Ausstoßes in einem gesonderten Anzeigefeld 11 erfolgen. In einer weiteren Ausführungsform kann die Anzeige über ein Bedienelement 12 abgerufen werden.

In einer ersten Ausführungsform ist die Auswerteeinrichtung 1 als ein separates Steuergerät in dem Fahrzeug ausgeführt. Sie kann aber auch in die Anzeigeeinheit 9 integriert sein. In einer weiteren Ausführungsform ist es auch möglich, die Auswerteeinrichtung 1 in ein Motorsteuergerät einzubringen.

In einer weiteren Ausführungsform ist die Auswerteeinrichtung 1 mit einem Wegstreckenmesser 13 verbunden, der eine von dem Fahrzeug, in dem die Auswerteeinrichtung 1 angeordnet ist, zurückgelegte Fahrstrecke ermittelt. Die Recheneinheit 6 kann die emittierte, aus dem Treibstoffdurchfluss errechnete CO₂-Menge nun in Relation zu der zurückgelegten Strecke setzen, so dass ein entsprechender CO₂-Wert streckenbezogen ausgegeben werden kann, beispielsweise in der Einheit g/km. In einer anderen Ausführungsform kann die Auswerteeinrichtung auch mit einer Uhrenschaltung 14 verbunden sein, um einen zeitbezogenen CO₂-Ausstoß bestimmen zu können. Ein zeitbezogener CO₂-Ausstoß ist insbesondere bei einem Betrieb des Verbrennungsmotors 2 bei stehendem Fahrzeug relevant. Über die Bedieneinheit 12 kann zwischen einer Darstellung eines absoluten und eines streckenbezogenen sowie gegebenenfalls eines zeitbezogenen CO₂-Ausstoßes in der Anzeigeeinheit 9 umgeschaltet werden. Ferner ist es möglich, eine erfasste Gesamtmenge des CO₂-Ausstoßes über die Bedieneinheit 12 zurückzusetzen.

In einer Ausführungsform ist die Auswerteeinrichtung 1 in einem Gehäuse oder in Verbindung mit der Anzeigeeinheit 9 ausgeführt. In einer weiteren Ausführungsform können die Auswerteeinrichtung 1 und die Anzeigeeinheit 9 auch an verschiedenen Stellen an einem Fahrzeug montiert sein. Ferner ist es möglich, dass die Anzeigeeinheit 9 auch ein externes Gerät ist, das mit einer Fahrzeugelektronik verbunden wird, um einen in dem Speicher 7 der Auswerteeinrichtung 1 vorliegenden CO₂-Verbrauch auslesen zu können. Hierdurch ist es beispielsweise werkstattseitig möglich, über eine On-Board-Diagnose einen CO₂-Verbrauch eines Fahrzeugs zu erfassen. Insbesondere sind somit auch Fahrzeug-Feld-Kontrollen möglich, um den Verbrauch eines Fahrzeugs zu erfassen. Insbesondere sind somit auch Fahrzeug-Feld-Kontrollen möglich, um seitens des Herstellers oder im Rahmen einer im öffentlichen Auftrag durchgeführten Kontrolle die angegebenen Ausstoßwerte für einen CO₂-Ausstoß in der Praxis über eine Vielzahl von Fahrzeugen überprüfen zu können.

Erfindungsgemäß ist die Auswerteeinrichtung 1 mit einem Treibstoffsensor 15 verbunden, der beispielsweise in dem Treibstofftank 5 angeordnet ist. Der Treibstoffsensor 15 dient zur Messung einer Treibstoffart bzw. einer Treibstoffqualität. Insbesondere bei sogenannten Flex-Fuel-Fahrzeugen kann ein Betrieb des Fahrzeugs mit Ethanol, mit Benzin oder mit einem Gemisch aus beiden Kraftstoffarten erfolgen. Die Menge des bei einem vorgegebenen Volumen bei der Verbrennung des Kraftstoffs entstehenden Kohlendioxids hängt dabei von dem jeweiligen Mischungsverhältnis dieser Kraftstoffarten ab. Entsprechend kann in dem Speicher 7 für eine vorgegebene Volumenmenge, beispielsweise für einen Liter, eine aus diesem Volumen entstehende CO₂-Menge jeweils für verschiedene Mischungen abgelegt sein. Das Mischverhältnis und damit das entstehende CO₂ pro verbranntes Kraftstoffvolumen können damit unter Berücksichtigung des Treibstoffsensors 15 bestimmt werden. Der Treibstoffsensor 15 ist beispielsweise als ein kapazitiver Sensor bzw. als ein Widerstandssensor ausgeführt, wobei aus einer Kapazitätsmessung oder einer Leitfähigkeitsmessung oder über ein anderes Messverfahren ein Mischungsverhältnis des Treibstoffs bestimmt werden kann. Die Recheneinrichtung bestimmt dann unter Zugriff auf den Speicher diejenige CO₂-Menge, die bei einer Verbrennung des durch die Treibstoffleitung 4 zu dem Verbrennungsmotor 2 geführten Kraftstoffs entsteht.

In einer weiteren Ausführungsform kann ergänzend oder alternativ eine Information über den verbrauchten Kraftstoff auch über eine Datenleitung 16 von dem Verbrennungsmotor 2 an die Auswerteeinrichtung 1 übertragen werden.

Neben einer Erfassung eines variablen Treibstoffgemischs kann auch durch entsprechende sensorische Messung eine Treibstoffqualität eines Diesel-Kraftstoffs oder eines Super-Benzins entsprechend nachgemessen werden. Der Treibstoffsensor 15 ist in entsprechender Weise zur Detektion auszulegen.

In entsprechender Weise kann auch eine Erfassung eines CO₂-Ausstoßes eines Elektrofahrzeugs erfolgen, wobei in diesem Fall der Verbrennungsmotor 2 durch einen Elektromotor und der Tank 5 durch einen Akkumulator zu ersetzen sind. Statt der Durchflussmenge wird nunmehr der von dem Akkumulator zu dem Elektromotor fließende Strom erfasst. In einer weiteren Ausführungsform kann auch lediglich der Ladestrom in den Akkumulator erfasst werden.

In einer weiteren Ausführungsform ist es auch möglich, bei einem Überschreiten einer vorgegebenen, insbesondere streckenbezogenen Obergrenze eines CO₂-Ausstoßes ein Warnsignal an einen Fahrer des Fahrzeugs auszugeben.

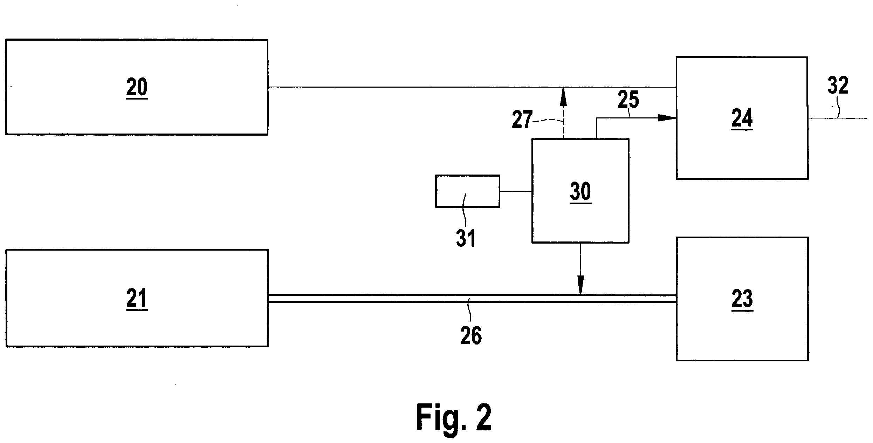

In der Fig. 2 ist eine weitere Ausführungsform für ein Fahrzeug mit einem Hybridmotor dargestellt. Das Fahrzeug weist hierbei einen Elektromotor 20 und einen Verbrennungsmotor 21 auf. Der Verbrennungsmotor 21 wird über einen Kraftstofftank 23 mit einem Treibstoff versorgt. Der Elektromotor 20 wird von einem Akkumulator 24 versorgt. Eine Auswerteeinrichtung 30 überwacht eine Treibstoffzufuhr von dem Tank 23 über eine Treibstoffleitung 26 zu dem Verbrennungsmotor 21. Ferner überwacht die Auswerteeinrichtung 30 ein Aufladen des Akkumulators 24 über eine Schnittstelle 25. Ggf. kann auch eine an den Elektromotor 20 abgegebene elektrische Leistung über einen Anschluss 27 überwacht werden. Ein absoluter bzw. strecken- bzw. zeitbezogener CO₂-Ausstoß wird von der Auswerteeinrichtung an eine Anzeigeeinrichtung 31 zur Darstellung in der Anzeigeeinrichtung weitergegeben. Ferner kann über die Auswerteeinrichtung 30 ein externer Anschluss 32 zum Laden des Akkumulators 24 überwacht werden. In entsprechender Weise wie in der Ausführungsform gemäß der Fig. 1 kann die Auswerteeinrichtung aus dem Treibstoffverbrauch bei der Ausführungsform der Fig. 2 einen sich aus der Verbrennung des Treibstoffs ergebenden CO₂-Ausstoß bestimmen. Wird der Akkumulator 24 durch einen Betrieb des Verbrennungsmotors 21 geladen, kann das in Bezug auf die Ladung des Akkumulators erzeugte Kohlendioxid außer Betracht bleiben, da eine Berücksichtigung bei einer Entladung des Akkumulators eingerechnet wird. Der bei der Erzeugung dieser Ladung entstehende Kohlendioxid-Ausstoß (Wirkungsgrad) ist dem System bekannt und kann entsprechend berücksichtigt werden. Zudem kann aus der über die Stromzuführung 32 aufgenommenen elektrischen Leistung ebenfalls ein CO₂-Ausstoß bestimmt werden, der sich aus demjenigen CO₂-Ausstoß bestimmt, der bei der Erzeugung des aufgenommenen Stromes entstanden ist. Vorzugsweise ist es möglich, der Auswerteeinrichtung hierfür einen CO₂-Wert vorzugeben. Stammt die hierfür verwendete elektrische Energie jedoch aus einer regenerativen Energiequelle, beispielsweise aus Wasserkraft oder aus Solarenergie, kann der CO₂-Ausstoß für eine elektrische Leistungsaufnahme auch auf Null gesetzt werden.

Ferner ist es auch möglich, bei einem Betrieb des Elektromotors 20 jeglichen CO₂-Ausstoß außer Betracht zu lassen, da dieser bereits bei einem Aufladevorgang durch einen Betrieb des Verbrennungsmotors 21 mit erfasst wurde. Eine Erfassung einer zusätzlichen Aufladung mittels eines Stromnetzes kann über eine Überwachung des Ladeanschlusses 32 erfolgen.

Neben der hier erläuterten Verwendung insbesondere für Kraftfahrzeuge ist es möglich, eine entsprechende CO₂-Anzeige für andere Fahrzeuge wie beispielsweise Eisenbahnfahrzeuge, Schiffe und Flugzeuge in ähnlicher Weise zu verwenden.

Neben einem hier gezeigten Energiespeicher in Form eines Akkumulators oder eines Treibstofftanks können auch andere Energiespeicher, wie beispielsweise Dampfspeicher, Druckluftspeicher oder Schwungräder mit berücksichtigt werden.

## Patentansprüche

1. Auswerteeinrichtung (1, 30) zur Ermittlung eines CO2-Ausstoßes eines Fahrzeugs mit einem ersten Sensor (3) zur Überwachung wenigstens einer Fahrzeugeinrichtung (2, 4, 5, 24, 26) sowie wenigstens einer Schnittstelle zu dem ersten Sensor (3) zur Überwachung wenigstens einer Fahrzeugeinrichtung (2, 4, 5, 24, 26), mit einer Recheneinheit (6) zur Bestimmung eines CO2-Ausstoßes des Fahrzeugs in Abhängigkeit von einem erfassten Zustand der über den ersten Sensor überwachten Fahrzeugeinrichtung (2, 4, 5, 24, 26) und mit einer Schnittstelle (8) zur Übermittlung des bestimmten CO2-Ausstoßes an eine Ausgabeeinheit (9), wobei die von dem Sensor überwachte Fahrzeugeinrichtung eine Energieversorgungseinrichtung (4, 5) des Fahrzeugs ist, **dadurch gekennzeichnet, dass** der erste Sensor eine Durchflussmesseinrichtung ist zur Ermittlung eines Treibstoffdurchflusses und dass die Auswerteeinrichtung (1) einen Treibstoffsensor (15) zur Ermittlung einer Treibstoffart sowie eine Schnittstelle zu dem Treibstoffsensor (15) zur Ermittlung der Treibstoffart zur Ermittlung des CO2-Ausstoßes in Abhängigkeit von der Treibstoffart aufweist.

2. Auswerteeinrichtung nach Anspruch 1, **dadurch gekennzeichnet, dass** die von dem Sensor überwachte Fahrzeugeinrichtung eine Fahrzeugantriebseinheit (2, 20, 21) ist.

3. Auswerteeinrichtung nach einem der vorhergehenden Ansprüche, **dadurch gekennzeichnet, dass** die Auswerteeinrichtung (30) eine Schnittstelle (25) zu einem Sensor zur Überwachung eines Lade- oder eines Entladevorgangs einer Akkumulatoreinheit (24) aufweist.

4. Auswerteeinrichtung nach einem der vorhergehenden Ansprüche, **gekennzeichnet durch** eine Schnittstelle zu einem Wegesensor (13) und/oder zu einer Uhrenschaltung (14) zur Ermittlung eines Strecken- und/oder Zeitbezugs des CO2-Ausstoßes.

5. Anzeigeeinrichtung mit einer Auswerteeinrichtung nach einem der vorhergehenden Ansprüche und mit einer Anzeigeeinheit (9) als Ausgabeeinheit für die Ausgabe des CO2-Ausstoßes.

6. Anzeigeeinrichtung nach Anspruch 5, **gekennzeichnet durch** eine Bedieneinheit zur Steuerung eines Wechsels zwischen einer Darstellung eines absoluten CO2-Ausstoßes und einem strecken- oder zeitbezogenen CO2-Ausstoß.

7. Verfahren zur Anzeige eines CO2-Ausstoßes eines Fahrzeugs, aufweisend einen ersten Sensor (3) zur Überwachung wenigstens einer Fahrzeugeinrichtung (2, 4, 5, 24, 26), wobei der erste Sensor (3) wenigstens eine Fahrzeugeinrichtung (2, 4, 5) überwacht, wobei in Abhängigkeit von einem erfassten Zustand der über den ersten Sensor überwachten Fahrzeugkomponente (2, 4, 5) ein CO2-Ausstoß bestimmt und ausgegeben wird, wobei der Sensor als Fahrzeugeinrichtung eine Energieversorgungseinrichtung (4, 5) des Fahrzeugs überwacht, **dadurch gekennzeichnet, dass** der erste Sensor eine Durchflussmesseinrichtung ist und einen Treibstoffdurchfluss ermittelt und dass die Auswerteeinrichtung (1), aufweisend einen Treibstoffsensor (15) zur Ermittlung einer Treibstoffart, über eine Schnittstelle zu dem Treibstoffsensor (15) die Treibstoffart zur Ermittlung des CO2-Ausstoßes in Abhängigkeit von der Treibstoffart ermittelt.

## Claims

1. Evaluation device (1, 30) for acquiring a CO₂ emission of a vehicle with a first sensor (3) for monitoring at least one vehicle device (2, 4, 5, 24, 26) as well as at least one interface to the first sensor (3) for monitoring at least one vehicle device (2, 4, 5, 24, 26), with a computer unit (6) for determining a CO₂ emission of the vehicle as a function of a sensed state of the vehicle device (2, 4, 5, 24, 26) monitored by means of the first sensor, and with an interface (8) for transferring the determined CO₂ emission to an output unit (9), wherein the vehicle device which is monitored by the sensor is an energy supply device (4, 5) of the vehicle, **characterized in that** the first sensor is a throughflow-measuring device for acquiring a throughflow of fuel, and **in that** the evaluation device (1) has a fuel sensor (15) for acquiring a type of fuel and an interface to the fuel sensor (15) for acquiring the type of fuel in order to acquire the CO₂ emission as a function of the type of fuel.

2. Evaluation device according to Claim 1, **characterized in that** the vehicle device which is monitored by the sensor is a vehicle drive unit (2, 20, 21).

3. Evaluation device according to one of the preceding claims, **characterized in that** the evaluation device (30) has an interface (25) to a sensor for monitoring a charging process or a discharging process of an accumulator unit (24).

4. Evaluation device according to one of the preceding claims, **characterized by** an interface to a travel sensor (13) and/or to a clock circuit (14) for acquiring a distance reference and/or time reference of the CO₂ emission.

5. Display device having an evaluation device according to one of the preceding claims and having a display unit (9) as an output unit for outputting the CO₂ emission.

6. Display device according to Claim 5, **characterized by** an operator control unit for controlling a changeover between a representation of an absolute CO₂ emission and a distance-related or time-related CO₂ emission.

7. Method for displaying a CO₂ emission of a vehicle, having a first sensor (3) for monitoring at least one vehicle device (2, 4, 5, 24, 26), wherein the first sensor (3) monitors at least one vehicle device (2, 4, 5), wherein a CO₂ emission is determined and output as a function of a sensed state of the vehicle component (2, 4, 5) which is monitored by means of the first sensor, wherein the sensor monitors, as a vehicle device, an energy supply device (4, 5) of the vehicle, **characterized in that** the first sensor is a throughflow-measuring device and acquires a throughflow of fuel, and **in that** the evaluation device (1) having a fuel sensor (15) for acquiring a type of fuel acquires the type of fuel via an interface to the fuel sensor (15) in order to acquire the CO₂ emission as a function of the type of fuel.

## Revendications

1. Dispositif d'évaluation (1, 30) permettant de déterminer un échappement de CO2 d'un véhicule, comportant un premier capteur (3) destiné à surveiller au moins un dispositif de véhicule (2, 4, 5, 24, 26) ainsi qu'au moins une interface pour le premier capteur (3), destinée à surveiller au moins un dispositif de véhicule (2, 4, 5, 24, 26), comportant une unité de calcul (6) destinée à déterminer un échappement de CO2 du véhicule en fonction d'un état détecté d'un dispositif de véhicule (2, 4, 5, 24, 26) surveillé par le premier capteur et comportant une interface (8) destinée à transmettre l'échappement de CO2 déterminé à une unité de sortie (9), dans lequel le dispositif de véhicule surveillé par le capteur est un dispositif d'alimentation en énergie (4, 5), **caractérisé en ce que** le premier capteur est un dispositif de mesure de débit destiné à déterminer un débit de combustible et **en ce que** l'unité d'évaluation (1) comporte un capteur de combustible (15) destiné à déterminer un type de combustible ainsi qu'une interface pour le capteur de combustible (15) afin de déterminer le type de combustible dans le but de déterminer l'échappement de CO2 en fonction du type de combustible.

2. Dispositif d'évaluation selon la revendication 1, **caractérisé en ce que** le dispositif de véhicule surveillé par le capteur est une unité d'entraînement de véhicule (2, 20, 21).

3. Dispositif d'évaluation selon l'une quelconque des revendications précédentes, **caractérisé en ce que** le dispositif d'évaluation (30) comporte une interface (25) pour un capteur destiné à surveiller un processus de charge ou de décharge d'une unité accumulatrice (24).

4. Dispositif d'évaluation selon l'une quelconque des revendications précédentes, **caractérisé par** une interface pour un capteur de déplacement (13) et/ou pour un circuit d'horloge (14) destiné à déterminer une référence de parcours et/ou de temps de l'échappement de CO2.

5. Dispositif d'affichage comportant un dispositif d'évaluation selon l'une quelconque des revendications précédentes et comportant une unité d'affichage (9) en tant qu'unité de sortie destinée à fournir en sortie l'échappement de CO2.

6. Dispositif d'affichage selon la revendication 5, **caractérisé par** une unité de commande destinée à commander un basculement entre une représentation d'un échappement absolu de CO2 et un échappement de CO2 par rapport au parcours ou au temps.

7. Procédé d'affichage d'un échappement de CO2 d'un véhicule, comportant un premier capteur (3) destiné à surveiller au moins un dispositif de véhicule (2, 4, 5, 24, 26) dans lequel le premier capteur (3), surveille au moins un dispositif de véhicule (2, 4, 5), dans lequel, un échappement de CO2 est déterminé et fourni en sortie, en fonction d'un état détecté du composant de véhicule (2, 4, 5) surveillé par l'intermédiaire du premier capteur, dans lequel le capteur surveille un dispositif d'alimentation en énergie (4, 5) du véhicule en tant que dispositif de véhicule, **caractérisé en ce que** le premier capteur est un dispositif de mesure de débit et détermine un débit de combustible et **en ce que** l'unité d'évaluation (1), qui comporte un capteur de combustible (15) destiné à déterminer un type de combustible, détermine le type de combustible par l'intermédiaire d'une interface pour le capteur de combustible (15), afin de déterminer l'échappement de CO2 en fonction du type de combustible.
